# EUROPÄISCHE PATENTSCHRIFT

(11) **EP 1 000 280 B1**
(45) Veröffentlichungstag und Bekanntmachung des Hinweises auf die Patenterteilung: **31.07.2002**
(21) Anmeldenummer: 98942602.8
(22) Anmeldetag: 23.07.1998
(51) Int. Cl.: F16H 57/02, F16H 1/12

(54) **GETRIEBEBAUKASTEN MIT KRONENRADGETRIEBE**
MODULAR GEAR SYSTEM WITH CONTRATE GEAR
SYSTEME MODULAIRE D'ENGRENAGE DOTE D'UN ENGRENAGE A COURONNE DENTEE

(30) Priorität: 02.08.1997 DE 19733546
(43) Veröffentlichungstag der Anmeldung: 17.05.2000
(73) Patentinhaber: Lenze GmbH & Co. KG, 31855 Aerzen (DE)
(72) Erfinder: ZIMMER, Detmar, D-32657 Lemgo (DE)
(74) Vertreter: Elbertzhagen, Otto, Dipl.-Ing.
(86) Internationale Anmeldenummer: EP9804618
(87) Internationale Veröffentlichungsnummer: WO9906743

(56) Entgegenhaltungen:
- EP-A- 0 557 961
- DE-A- 2 855 797
- DE-A- 19 616 791
- US-A- 2 910 882
- US-A- 3 665 774
- US-A- 4 109 398
- US-A- 4 515 564
- US-A- 5 149 311
- PATENT ABSTRACTS OF JAPAN vol. 006, no. 121 (P-126), 6. Juli 1982 -& JP 57 048716 A (KYOCERA CORP), 20. März 1982

## Beschreibung

### TECHNISCHES GEBIET

Die Erfindung bezieht sich auf einen Getriebebaukasten der im Gattungsbegriff des Patentanspruchs 1 näher bezeichneten Art.

Ein solcher Getriebebaukasten erlaubt es, ein Getriebe bestimmter Bauart mit einer dazu passenden Antriebsbaugruppe, die wiederum von einer bestimmten Antriebsbaugruppenart entnommen wird, zu kombinieren, so daß also gleichsam Getriebemodule und Antriebsmodule zu einer Getriebeantriebseinheit miteinander verbunden werden, die an den jeweiligen Anwendungsfall angepaßt ist.

Zu den Getriebemodulen gleicher oder unterschiedlicher Bauart, die zu einem derartigen Baukasten gehören, zählen vornehmlich Stirnradgetriebe, Flachgetriebe, Stirnradschnekkengetriebe und Kegelstirnradgetriebe. Bei den beiden erstgenannten handelt es sich um Getriebe, deren Abtriebswelle mit der Abtriebswelle der jeweils damit kombinierten Antriebsmodule achsparallel ist. Die beiden weiter benannten Getriebe sind sogenannte Winkelgetriebe, bei denen die Abtriebswelle überwiegend unter einem rechten Winkel zu der Abtriebswelle der jeweils damit kombinierten Antriebsmodule steht. Bei den Antriebsmodulen hat man es vornehmlich mit unterschiedlich aufgebauten Elektromotoren zu tun, die auch als sogenannte Flanschmotoren ausgebildet sein können. Ebenso gibt es hier die sogenannte freie Welle, bei der es sich um ein Antriebsmodul mit einer Eingangswelle handelt, die z.B. über ein geeignetes Getriebe mit einem Fremdantrieb verbunden sein kann. All diese Antriebsmodule haben jeweils ein Abtriebsritzel, welches im Zuge einer einfachen Fertigung als zylindrisches Ritzel ausgebildet ist, wofür es mindestens eine oder mehrere geeignete Verzahnungen gibt. In der zusammengefügten Anordnung jeweils eines Getriebes und eines solchen Antriebsmoduls steht das zylindrische Abtriebsritzel der Antriebsmodule in Eingriff mit einem entsprechend verzahnten Antriebsstirnrad und stellt in der Getriebeantriebseinheit eine erste Übersetzungsstufe dar, deren Übersetzung durch ein unterschiedlich wählbares Abtriebsritzel sowie ein entsprechend angepaßtes Antriebsstirnrad auch bei gleicher Getriebegröße variiert werden kann.

### STAND DER TECHNIK

Bei einem Getriebebaukasten der beschriebenen Art stellen die Winkelgetriebe besonders aufwendige Komponenten dar. Üblicherweise wird hier eine zusätzliche Getriebestufe mit einer Kegelverzahnung oder einem Schneckenradsatz vorgesehen. Bei den Kegelstirnradgetrieben erhält man deshalb eine mindestens zweistufige Übersetzung, denn dem Kegelradsatz ist ein Eingangsstirnradsatz vorgeordnet und ein eventuell weiterer Stirnradsatz nachgeschaltet, um wenigstens insoweit den Aufbau mit Getriebemodulen anderer Bauart zu vereinheitlichen. Ebenso kann einem Schneckenradsatz immer noch ein Stirnradsatz vorgelagert werden, weshalb hier häufig eine zumindest zweistufige Übersetzung vorliegt. Allerdings lassen sich mit einer solchen zweistufigen Übersetzung eines Schneckenradgetriebes sehr große Übersetzungsverhältnisse realisieren.

Die EP 0 557 961 A1 beschreibt eine Baureihe von Winkelgetrieben, bei denen es um konstante Anschlußabmessungen zwischen Getriebemodulen und Motormodulen geht. Auf der Abtriebswelle der Motormodule ist jeweils ein Ritzel mit Kegelradverzahnung angeordnet, welches für die Kombination mit einem Kronenrad nicht geeignet ist. Entsprechend ist in diesem Dokument ein Kronenradgetriebe als Winkelgetriebe nicht berücksichtigt.

Das Dokument US 4,515,564 A offenbart den Aufbau für drei Getriebeeinsätze mit unterschiedlichen Übersendungen für ein Dental-Handstück. Zwei unterschiedliche Motoreinheiten, zum einen mit Druckluftantrieb und zum anderen mit Elektroantrieb, können für die Getriebeeinsätze gewählt werden. Die Verbindung zwischen der jeweiligen Motoreinheit und der Getriebeeinheit erfolgt über eine einfache Mitnehmerkupplung, weswegen es an der Verbindungsstelle eine Getriebestufe nicht gibt. Wenn man bei den verschiedenen Kombinationsmöglichkeiten auch von einem Baukastensystem sprechen kann, so gibt es hierbei jedoch nicht unterschiedliche Getriebearten und vor allem gibt es ein Kronenradgetriebe nicht.

Anders verhält es sich bei dem Dental-Handstück nach der DE 28 55 797 A1, in welchem zwecks Drehzahländerung ein Schaltgetriebe untergebracht ist. Eine erste Schaltstufe ist in Stirnverzahnung und eine zweite Schaltstufe in Kronenradverzahnung ausgelegt. Ein Getriebebaukasten mit untereinander austauschbaren Antriebs- und Getriebemodulen ist hier nicht gegeben.

Dies trifft ebenso auf die Getriebeanordnung nach der US-5,149,311 A zu, die vor allem für den Rotorantrieb bei Hubschraubern vorgesehen ist. Diese Anordnung umfaßt ein mehrstufiges Getriebe aus Kronenräder und damit in Eingriff stehenden zylindrischen Ritzeln, und aus Wartungsgründen sind die Verzahnungsbaugruppen modular aufgebaut. Die Kronenradverzahnung ist hier gewählt, um gegenüber den sonst üblichen Kegelradstufen die übertragbare Leistung größer, die Einstellung einfacher und die erreichbare Übersetzung höher zu machen. Damit spart man beim Rotorantrieb eines Hubschraubers Gewicht ein. Bei der bekannten Getriebeanordnung handelt es sich nicht um einen Getriebebaukasten mit unterschiedlichen, jedoch miteinander kombinierbaren Getriebe- und Antriebsmodulen.

Die bekannten Kronenradgetriebe stellen ebenfalls Winkelgetriebe dar, bei denen ein zylindrisches Ritzel mit dem sogenannten Kronenrad zusammenwirkt. Ein derartiges Getriebe ist in der DE-Z "antriebstechnik", 33 (1994) Nr. 11 unter dem Titel "Cylkro-Getriebe - eine neue Herausforderung" im einzelnen beschrieben. Das Kronenrad eines Kronenradgetriebes muß man sich als eine kreisförmig gekrümmte Zahnstange vorstellen, deren Zähne entweder parallel zur Kreis-ebene oder schräg dazu angeordnet sind, wobei das zugehörige, zylindrische Ritzel eine entlang seiner Zahnbreite konstante Geometrie hat und deshalb ohne weiteres auch für den Eingriff in eine übliche Stirnradverzahnung geeignet ist. Insbesondere bei geeigneter Wahl des Durchmessers des Kronenrades bietet das Kronenradgetriebe den Vorzug eines großen Überset zungsbereichs, einer axialen Freiheit des Ritzels und beliebiger Achsenwinkel.

### DIE ERFINDUNG

Der Erfindung liegt nun die Aufgabe zugrunde, bei einem Getriebebaukasten der gattungsbildenden Art wenigstens eine der ein Winkelgetriebe betreffenden Bauart einfacher zu gestalten, ohne daß die Kombinationsfähigkeit der Gesamtheit der Getriebemodule gleicher oder unterschiedlicher Bauart mit denen der Antriebsmodule beeinträchtigt wird.

Diese Aufgabe wird bei einem Getriebebaukasten der gattungsgemäßen Art nach der Erfindung durch die kennzeichnenden Merkmale des Patentanspruchs 1 gelöst.

Für die Erfindung ist wesentlich, daß sich für den Getriebebaukasten insgesamt die Anzahl der erforderlichen Verzahnteile reduzieren läßt. Denn anstelle der bisher üblichen Kegelradsätze oder Schneckenradsätze mit ihren jeweiligen Spezialverzahnungen werden für die Herstellung von Kronenradgetrieben zusätzlich zu den ohnehin vorhandenen Zahnrädern lediglich die Kronenräder benötigt. Die Abtriebsritzel der Antriebsmodule, die mit diesen Kronenrädern kämmen, sind aus den Stirnradpaarungen vorhanden, die bei den übrigen Getriebemodule verwendet werden. Zudem entfällt bei den Kronenradgetrieben die Eingangs-Stirnradstufe, weil eben unmittelbar mit dem Abtriebsritzel der jeweiligen Antriebseinheit der betreffenden Antriebsbaugruppenart unmittelbar in das betreffende Kronenrad eingegriffen wird.

Vorteilhafte Ausgestaltungsmerkmale der Erfindung ergeben sich aus den Unteransprüchen.

### KURZBESCHREIBUNG DER ZEICHNUNGSABBILDUNGEN

Die Erfindung wird nachfolgend anhand der Zeichnung an einem Ausführungsbeispiel noch näher erläutert. Dabei zeigen:
- Fig. 1: eine Prinzipdarstellung eines Getriebebaukastens und
- Fig. 2: in etwas größerer Darstellung das Kronenradgetriebe des Getriebebaukastens nach Figur 1 kombiniert mit einem der Antriebsmodule.

### BESTER WEG ZUR AUSFÜHRUNG DER ERFINDUNG

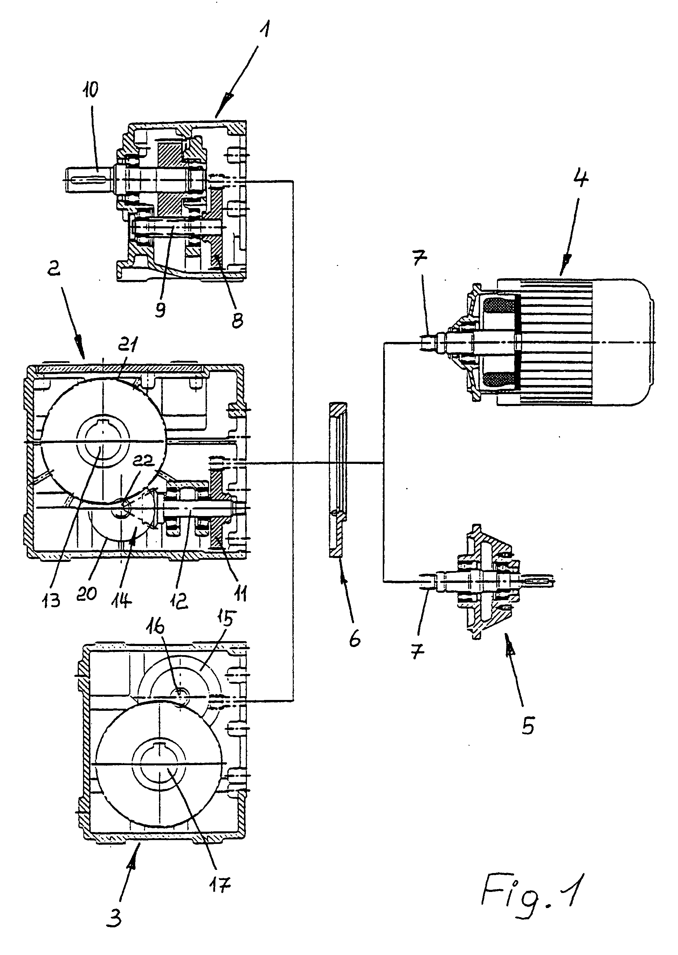

Im einzelnen zeigt Figur 1 in der linken Hälfte Getriebemodule 1 - 3, die mit Antriebs modulen 4, 5 kombinierbar sind, wobei für die mechanische Verbindung jeweils ein geeigneter Adapter 6 zwischen dem jeweiligen Getriebemodul 1, 2 oder 3 und dem damit kombinierten Antriebsmodul 4 oder 5 vorgesehen wird.

Bei dem Antriebsmodul 4 handelt es sich um einen Elektromotor, dessen Abtriebswelle am äußeren freien Ende ein zylindrisches Abtriebsritzel 7 aufweist. Das gleiche Abtriebsritzel 7 ist auch an dem weiteren Antriebsmodul 5 vorgesehen, bei dem es sich um eine sogenannte freie Welle handelt, die mit einem nicht dargestellten Fremdantrieb verbindbar ist.

Das mit 1 bezeichnete Getriebemodul ist ein Stirnradgetriebe, an das eine der Antriebseinheiten 4, 5 derart angeflanscht wird, daß das zylindrische Abtriebsritzel 7 mit einem Eingangs-Stirnrad 8 kämmt. Dessen Welle 9 ist über weitere Radsätze mit einer Abtriebswelle 10 verbunden, die mit der Eingangswelle 9 und mit dem Abtriebsritzel 7 des betreffenden Antriebsmoduls 4, 5 achsparallel ist. Bei dem Getriebemodul 2 handelt es sich um ein Kegelstirnradgetriebe, an das in analoger Weise eines der Antriebsmodule 4, 5 angeflanscht werden kann. Hier kämmt das zylindrische Abtriebsritzel 7 ebenfalls mit einem Eingangs-Stirnrad 11 auf einer Eingangswelle 12, die mit dem Abtriebsritzel 7 des Antriebsmoduls 4, oder 5 achsparallel ist. Über einen Kegelradsatz 14 ist die Eingangswelle 12 mit einer Zwischenwelle 22 verbunden, die wiederum über einen weiteren Zahnradsatz 21, 22 mit einer Abtriebswelle 13 in Verbindung steht, die rechtwinklig zu der Eingangswelle 12 und damit zu dem antreibenden Abtriebsritzel 7 des Antriebsmoduls 4 oder 5 angeordnet ist.

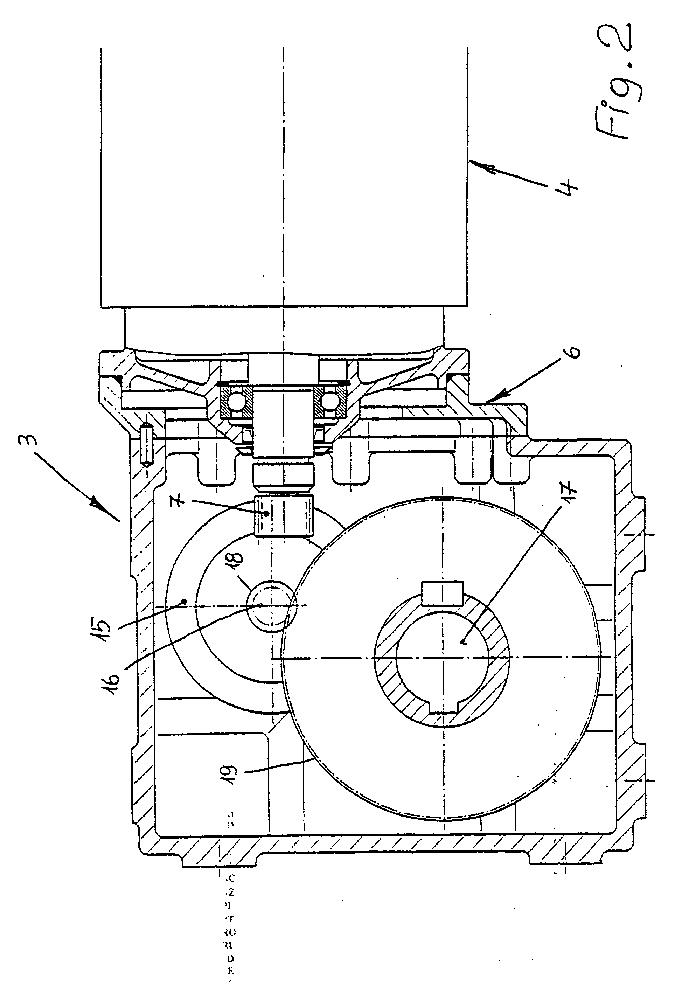

Die Besonderheit in dem Getriebebaukasten stellt das Getriebemodul 3 dar, denn hier haben wir es mit einem Kronenradgetriebe zu tun. Das gleiche zylindrische Abtriebsritzel 7 der Antriebsmodule 4, 5, das bei den übrigen Getriebemodulen 1 oder 2 des Getriebebaukastens mit einem Eingangs-Stirnrad 8 oder 11 kämmt, greift hier in ein Kronenrad 15 ein, was im einzelnen in Figur 2 deutlicher zu erkennen ist. Das zylindrische Abtriebsritzel 7 des Elektromotors als Antriebsmodul 4 kämmt mit dem auf einer Zwischenwelle 16 sitzenden Kronenrad 15, so daß hier schon die rechtwinklige Anordnung einer das Kronenrad 15 tragenden Zwischenwelle 16 relativ zur Achse des Abtriebsritzels 7 hergestellt ist. Mit der Zwischenwelle 16 ist eine Abtriebswelle 17 parallel, die mit der Zwischenwelle 16 über einen Radsatz 18, 19 verbunden ist. Man erreicht hier mit dem Kronenradgetriebe 3 auf verhältnismäßig kleinem Raum ein großes Übersetzungsverhältnis, worauf es jedoch nicht entscheidend ankommt. Denn wichtig ist vielmehr, daß das Kronenradgetriebe 3 innerhalb des Getriebebaukastens die Zahl derjenigen Getriebe erhöht, die mit ein und demselben Abtriebsritzel 7 der unterschiedlichen Antriebsmodule 4, 5 harmoniert.

## Patentansprüche

1. Getriebebaukasten bestehend aus zwei oder mehreren Getriebemodulen (1,2 oder 3) gleicher oder unterschiedlicher Bauart, die jeweils eine oder mehrere Getriebegrößen sowie innerhalb einer Größe eine oder mehrere Übersetzungen umfassen und von denen mindestens ein Getriebemodul (3) ein Winkelgetriebe ist, und ferner aus einem oder mehreren damit wahlweise kombinierbaren Antriebsmodulen (4 oder 5), wobei das betreffende Antriebsmodul (4 oder 5) ein der jeweiligen Übersetzung entsprechendes, zylindrisches Abtriebsritzel (7) hat,
**dadurch gekennzeichnet,**
**daß** das eine Winkelgetriebe (3) oder zumindest eines von mehreren Winkelgetrieben (2 oder 3) ein Kronenradgetriebe ist, dessen Kronenrad (15) an den Eingriff des jeweiligen Abtriebsritzels (7) des dazu passenden Antriebsmoduls (4 oder 5) angepaßt ist.

2. Getriebebaukasten nach Anspruch 1,
**dadurch gekennzeichnet,**
**daß** zumindest mehrere Antriebsmodule (4, 5) gleiche. Abtriebsritzel (7) haben, an die das Kronenrad (15) des Kronenradgetriebes (3) angepaßt ist.

3. Getriebebaukasten nach Anspruch 1 oder 2,
**dadurch gekennzeichnet,**
**daß** neben dem Kronenradgetriebe (3) vorhandene Getriebemodule (1, 2 oder 3) Antriebsstirnräder (8, 11) haben, die entsprechend dem Kronenrad (15) des Kronenradgetriebes (3) an den Eingriff des jeweils gleichen zylindrischen Abtriebsritzels (7) von dazu passenden Antriebsmodulen (4 oder 5) angepaßt sind.

## Claims

1. Gearbox housing consisting of two or more gearbox modules (1,2 or 3) of the same or different construction, which each comprise one or more gearbox sizes as well as within a size one or more ratios and of which at least one gearbox module (3) is an angle gearbox, and furthermore has one or more drive modules (4 or 5) optionally combinable therewith, wherein the respective drive module (4 or 5) has a cylindrical driven pinion (7) corresponding to the relevant ratio,
**characterised in that**
the one angle gearbox (3) or at least one of the several angle gearboxes (2 or 3) is a crown wheel gearbox, the crown wheel (15) of which is designed to engage with the relevant driven pinion (7) of the drive module (4 or 5) which is associated therewith.

2. Gearbox housing according to Claim 1, **characterised in that** at least several drive modules (4, 5) have the same driven pinion (7) with which the crown wheel (15) of the crown wheel gearbox (3) is engaged.

3. Gearbox housing according to Claim 1 or 2, **characterised in that** besides the crown wheel gearbox (3) equipped gearbox module (1, 2 or 3) have driving spur gears (8, 11) which, corresponding to the crown wheel (15) of the crown wheel gearbox (3) conform to the engagement of each respective cylindrical driven pinion (7) of the drive module (4 or 5) associated therewith.

## Revendications

1. Système modulaire d'engrenage composé, d'une part, de deux ou plusieurs modules (1, 2 ou 3) de construction identique ou différente, qui comprennent, chacun, une ou deux grandeurs d'engrenages ainsi qu'une ou plusieurs transmissions, l'un des modules (3), au moins, étant un engrenage angulaire, et, d'autre part, d'un ou de plusieurs modules d'entraînement (4 ou 5), lesdits modules d'engrenage et d'entraînement pouvant être combinés ensemble, à volonté, le module d'entraînement concerné (4 ou 5) présentant un pignon de sortie cylindrique (7) qui correspond à la transmission respective,
**caractérisé en ce que**
l'engrenage angulaire (3) ou, au moins, l'un des engrenages angulaires (2 ou 3) est un engrenage à couronne dentée, dont la couronne dentée (15) est adaptée à l'engagement du pignon de sortie (7) du module d'entraînement (4 ou 5) concerné.

2. Système modulaire d'engrenage selon la revendication 1,
**caractérisé en ce que**
plusieurs modules d'entraînement (4, 5), au moins, présentent des pignons de sortie (7) semblables, auxquels la couronne dentée (15) de l'engrenage (3) est adaptée.

3. Système modulaire d'engrenage selon la revendication 1 ou 2,
**caractérisé en ce que**
les modules d'engrenage (1, 2 ou 3), présents outre l'engrenage à couronne dentée (3), présentent des pignons droits (8, 11) qui, adéquatement à la couronne dentée (15) de l'engrenage (3), sont adaptés à l'engagement du pignon de sortie cylindrique (7) respectif des modules d'entraînement (4 ou 5) correspondants.
